# EUROPÄISCHE PATENTANMELDUNG

(11) **EP 1 344 968 A2**
(43) Veröffentlichungstag der Anmeldung: **17.09.2003**
(21) Anmeldenummer: 03005027.2
(22) Anmeldetag: 06.03.2003
(51) Int. Cl.: F16L 3/223, F16L 3/237, F16L 55/033

(54) **Schelle zur Lagefixierung von flexiblen Leitungen**

(30) Priorität: 14.03.2002 DE 10211158
(71) Anmelder: Hydac Accessories GmbH, 66125 Saarbrücken-Dudweiler (DE)
(72) Erfinder: Even, Rainer, 66123 Saarbrücken (DE)
(74) Vertreter: Patentanwälte Bartels und Partner

(57) **Zusammenfassung**

2. Bei einer Schelle zur Lagefixierung von flexiblen Leitungen 3, insbesondere von Druckschläuchen für Hydraulikflüssigkeit bei Arbeitsmaschinen wie Baggern oder dergleichen, mit einem zumindest einen Durchgang als Sitz für eine zu haltende Leitung aufweisenden Aufnahmekörper 1, der aus Halteteilen 5, 7, 9 gebildet ist, die den Durchgang 23 zwischen sich begrenzen und mittels einer Spannungseinrichtung 11 aneinander anlegbar sind, ist die Schelle als Distanzhalter für zumindest zwei Leitungen 3 derart ausgebildet, dass der Aufnahmekörper 1 aus zumindest zwei zu einem einheitlichen Körper aneinander anlegbaren Halteteilen 5, 7, 9 gebildet ist, von denen jeder zumindest zwei Durchgänge teilweise begrenzt.

## Beschreibung

Die Erfindung bezieht sich auf eine Schelle zur Lagefixierung von flexiblen Leitungen, insbesondere von Druckschläuchen für Hydraulikflüssigkeit bei Arbeitsmaschinen wie Baggern oder dergleichen, mit einem zumindest einen Durchgang als Sitz für eine zu haltende Leitung aufweisenden Aufnahmekörper, der aus Halteteilen gebildet ist, die den Durchgang zwischen sich begrenzen und mittels einer Spanneinrichtung aneinander anlegbar sind.

Schellen dieser Art sind für viele Anwendungszwecke bekannt. In großem Umfang werden solche Schellen bei hydraulisch betätigten Arbeitsmaschinen dazu benutzt, um Druckschläuche zu sichern, über die Arbeitszylinder gespeist werden. Bei Arbeitsmaschinen mit beweglichen Maschinenteilen, die im Betrieb durch mehrere Arbeitszylinder betätigt oder angetrieben werden, stellt sich vielfach die Aufgabe, mehrere Druckschläuche längs beweglicher Maschinenteile so zu führen, dass keine Gefahr besteht, dass die Arbeitsbewegungen Beschädigungen der Schläuche hervorrufen können. In besonderem Maße tritt dieses Problem bei Auslegern von Baggern auf, wo mehrere Druckschläuche im Abstand voneinander so zu führen sind, dass vermieden ist, dass Druckschläuche an den Gelenken des Auslegers aneinander reiben oder sich verhaken können.

Werden übliche Schellen benutzt, um mehrere Druckschläuche voneinander auf Distanz zu halten, werden für die Lagefixierung mehrerer Druckschläuche mehrere Schellen benutzt, die wiederum miteinander verbunden werden müssen. Falls es sich um unterschiedliche Schlauchdurchmesser handelt, sind unterschiedliche Schellen nötig, was zu einem erhöhten Kostenanfall führt.

Ausgehend von diesem Stand der Technik stellt sich die Erfindung die Aufgabe, eine Schelle zu schaffen, die eine einwandfreie Lagefixierung mehrerer flexibler Leitungen auf besonders einfache und wirtschaftliche Weise ermöglicht.

Bei einer Schelle der eingangs genannten Art ist diese Aufgabe erfindungsgemäß dadurch gelöst, dass die Schelle als Distanzhalter für zumindest zwei Leitungen derart ausgebildet ist, dass der Aufnahmekörper aus zumindest zwei zu einem einheitlichen Körper aneinander anlegbaren Halteteilen gebildet ist, von denen jeder zumindest zwei Durchgänge teilweise begrenzt.

Dadurch, dass erfindungsgemäß eine einen einheitlichen Körper aufweisende, d. h. einstückig ausgebildete Schelle, als Distanzhalter für mehrere Leitungen vorgesehen ist, wird auf einfachste Weise eine besonders hohe Stabilität der Fixierung der Leitungen erreicht sowie deren einwandfreie Distanzhaltung, die nicht von einer entsprechend geeigneten, gegenseitigen Anordnung von Einzelschellen abhängig ist, was eine wesentliche Vereinfachung der Montage bedeutet.

Vorzugsweise sind die den Aufnahmekörper bildenden Halteteile aus einem elastomeren Werkstoff, beispielsweise aus Gummi, gefertigt. Dies ermöglicht nicht nur eine sichere und schonende Lagefixierung von flexiblen Leitungen wie Druckschläuchen, sondern auch eine vorteilhafte Geräusch- und/oder Schwingungsdämpfung. Letzteres wird besonders begünstigt, wenn als elastomeres Material beispielsweise ein Gummiwerkstoff benutzt wird, der im Hinblick auf gute Schwingungsdämpfungseigenschaften ausgewählt ist.

Bei einem besonders bevorzugten Ausführungsbeispiel ist der Aufnahmekörper aus zumindest zwei Segmenten mit je kreisbogenförmigem Umfangsbereich gebildet, und die Segmente sind zur Bildung eines kreisrunden Aufnahmekörpers aneinander anlegbar.

Bei solcher Gestaltung des Aufnahmekörpers, bei dem dieser im Umriß kreisförmig ist, kann die Spanneinrichtung, mittels deren die den Aufnahmekörper bildenden Segmente aneinander anlegbar sind, in besonders einfacher Weise als Spannband ausgebildet sein, das den kreisrunden Aufnahmekörper an seinem Umfang umringt.

Es versteht sich, dass die Halteteile nicht kreissegmentartig ausgebildet zu sein brauchen, sondern eine von der Kreisbogenform abweichende Außenkontur haben könnten, so dass der Umriß des Aufnahmekörpers beispielsweise oval oder mehreckförmig sein könnte.

Vorzugsweise sind die Segmente einstückig geformt und sind über ein Biegescharnier so miteinander verbunden, dass sie durch Schwenkbewegungen um das Biegescharnier zum einheitlichen kreisrunden Aufnahmekörper vereinigbar sind.

Bei Benutzung von drei Segmenten mit je kreisbogenförmigem Umfangsbereich können die Segmente gemäß einem besonders bevorzugten Ausführungsbeispiel in der Weise einstückig geformt sein, dass ein mittleres Segment an beiden Enden seines kreisbogenförmigen Umfangsbereiches mit je einem Ende des kreisbogenförmigen Umfangsbereiches eines seitlichen Segmentes unter Bildung je eines Biegescharnieres verbunden ist. Bei einem derartigen Ausführungsbeispiel gestaltet sich die Montage besonders einfach, weil für die Fixierung dreier flexibler Leitungen lediglich ein einteiliges Bauteil um die betreffenden Leitungen herum zusammengeklappt werden muß, um den Aufnahmekörper mit den darin gelagerten Leitungen zu schließen, d. h. die Halteteile zum einheitlichen Aufnahmekörper zu vereinigen.

Um die Montagefreundlichkeit derartiger Ausführungsbeispiele noch weiter zu verbessern, können die den Aufnahmekörper bildenden Segmente hinsichtlich der Form ihrer Querschnittsfläche leicht unterschiedlich gestaltet sein. Genauer gesagt kann die Anordnung so getroffen sein, dass die Segmente nur in dem, bezogen auf das Kreiszentrum, radial äußeren, an den kreisbogenförmigen Umfangsbereich angrenzenden Teil gleich ausgebildet, jedoch in dem dem Kreiszentrum benachbarten Bereich unterschiedlich gestaltet sind. Wenn hierbei eines der Segmente, oder im Fall des Vorhandenseins dreier Segmente, die äußeren Segmente im Kreiszentrumsbereich etwas zurückgesetzte Endflächen aufweisen, ist die Gefahr vermieden, dass beim Klappen der jeweiligen Segmente um die Biegescharniere eine Behinderung der Klapp- oder Schwenkbewegung durch Anlaufen an den in die Durchgänge eingelegten Schläuchen erfolgen könnte.

Zur Lagerung flexibler Leitungen unterschiedlicher Durchmesser können die im Aufnahmekörper gebildeten Durchgänge unterschiedliche lichte Weiten besitzen. Um Beschädigungen empfindlicher Leitungen, wie Druckschläuche, zu vermeiden sind vorzugsweise sämtliche Berührungsstellen am Aufnahmekörper gerundet, und die Durchgänge sind ballig ausgeführt, so dass Toleranzen der Leitungen ausgeglichen werden können.

Nachstehend ist die Erfindung anhand eines in der Zeichnung dargestellten Ausführungsbeispieles im einzelnen erläutert. Es zeigen:
- Fig. 1 eine perspektivische Ansicht des zu beschreibenden Ausführungsbeispieles der erfindungsgemäßen Schelle, die in geschlossenem Zustand mit drei in ihr gelagerten Druckschläuchen gezeigt ist;
- Fig. 2 eine Vorderansicht dreier, über Biegescharniere einstückig zusammenhängender Segmente in gestreckter Lage, die zur Bildung des Aufnahmekörpers der Schelle von Fig. 1 aneinander anklappbar sind;
- Fig. 3 eine Seitenansicht des in Fig. 2 ganz rechts gelegenen Segmentes, gesehen in Richtung des mit III bezeichneten Pfeiles, und
- Fig. 4 eine Vorderansicht der zum einheitlichen Aufnahmekörper der Schelle zusammengeklappten Segmente von Fig. 2.

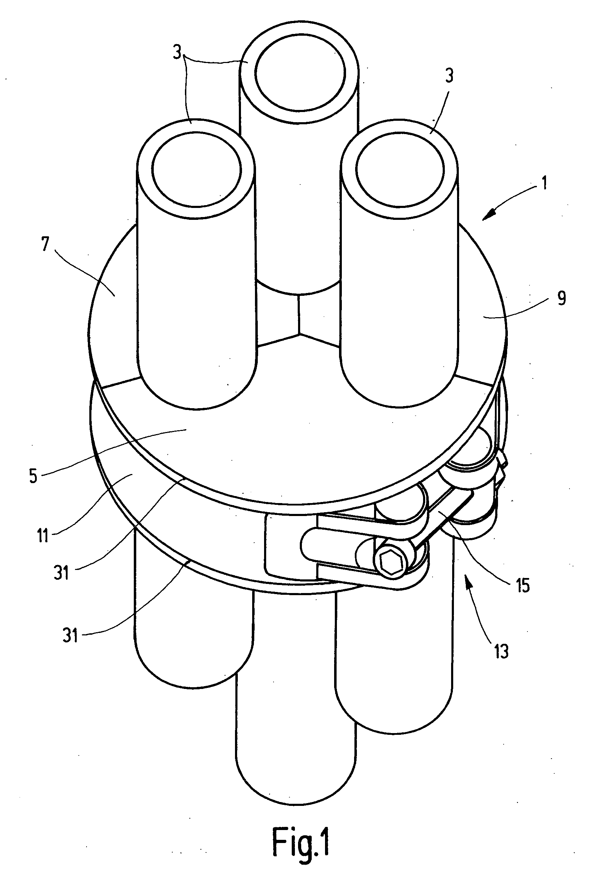

Fig. 1 zeigt ein Ausführungsbeispiel der erfindungsgemäßen Schelle mit einem als Ganzes mit 1 bezeichneten Aufnahmekörper. Bei dem dargestellten Beispiel handelt es sich um eine Distanzhalterschelle, in der drei Druckschläuche 3 gelagert sind. Der aus drei Segmenten 5, 7 und 9 zu einem einheitlichen Bauteil vereinigte Aufnahmekörper 1 ist durch ein Gelenkspannband 11 zusammengehalten, um die Schläuche 3 im Aufnahmekörper1 zu fixieren. Beim vorliegenden Beispiel ist das Spannband 11 in bekannter Art in Form eines sogenannten Gelenkbandes ausgebildet, also eines Stahlbandringes, der durch eine Verschlußeinrichtung 13 der aus der EP 0 508 050 B1 bekannten Art geschlossen und mittels einer Spannschraube 15 gespannt werden kann.

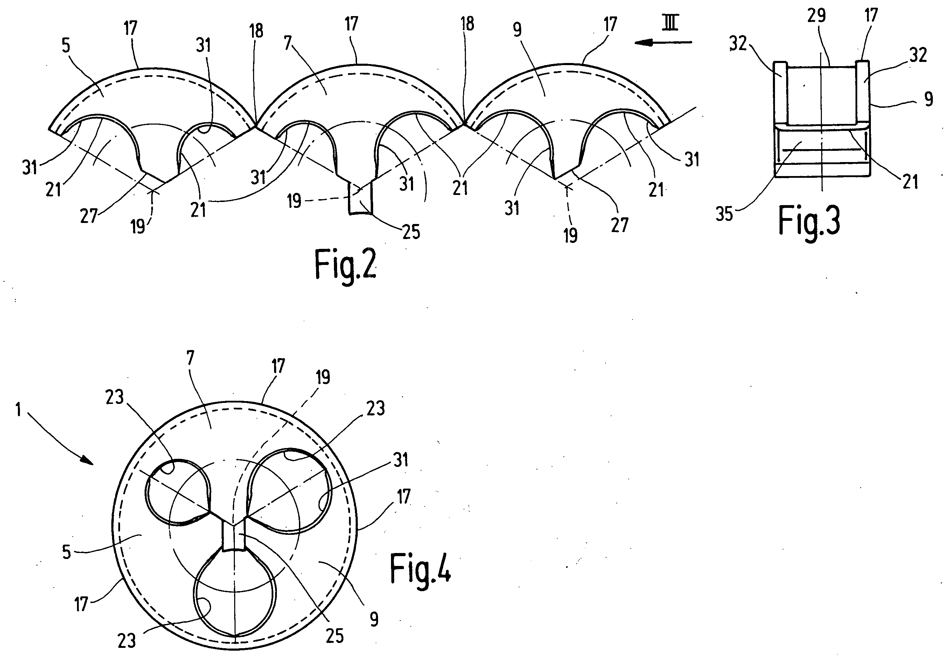

Wie aus Fig. 2 und 4 deutlich zu entnehmen ist, sind die den Aufnahmekörper 1 bildenden Segmente 5, 7 und 9 in der Art von Kreissegmenten gestaltet, d. h. sie weisen an einem ihrer Ränder jeweils einen kreisbogenförmigen Umfangsbereich 17 auf, die sich über je einen Drittelkreis erstrecken. Das in Fig. 2 mittlere Segment 7 hängt an beiden Enden seines kreisbogenförmigen Umfangsbereiches 17 über je ein Biegescharnier 18, mit dem angrenzenden Ende des kreisbogenförmigen Umfangsbereiches 17 des linksseitig gelegenen, seitlichen Segmentes 5 und des rechtsseitig gelegenen, seitlichen Segmentes 9 zusammen. Werden die Segmente 5 und 9 um die Biegescharniere 18 herum an das mittlere Segment 7 angeklappt, ergibt sich für den aus den Segmenten 5, 7 und 9 gebildeten Aufnahmekörper 1 die in Fig. 4 dargestellte Form, d. h. ein im Umfang kreisförmiger, einheitlicher Körper.

In den Randbereichen zwischen Umfangsbereich 17 und dem in Fig. 2 und 4 mit 19 bezeichneten Kreiszentrum 19, weisen die Segmente Mulden 21 mit je etwa halbkreisförmigem Querschnitt auf, die, wenn die Segmente zum Aufnahmekörper 1, siehe Fig. 4, zusammengeklappt sind, Durchgänge 23 als Sitz für darin aufzunehmende Schläuche 3 definieren.

Wie insbesondere aus Fig. 2 zu entnehmen ist, sind die Segmente 5, 7 und 9 nur in dem an ihren Umfangsbereich 17 in angrenzenden Bereich gleich ausgebildet, unterscheiden sich hinsichtlich der Formgestaltung jedoch in dem dem Kreiszentrum 19 benachbarten Bereich. Bei dem mittleren Segment 7 befindet sich in diesem Bereich ein über das Kreiszentrum 19 radial überstehender Fortsatz 25. Um die Segmente 5 und 9 vollständig an das mittlere Segment 7 ohne Behinderung durch den Fortsatz 25 anklappen zu können, weist das seitliche Segment 5 in der Nähe des Kreiszentrums 19 eine zurückgesetzte Endfläche 27 auf. Eine entsprechende zurückgesetzte Endfläche 27 ist ebenfalls am anderen seitlichen Segment 9 vorgesehen, siehe Fig. 2. Bei dieser Gestaltung lassen sich die Segmente 5, 7, 9 sozusagen "nahtlos" aneinander zum einheitlichen Aufnahmekörper 1 von Fig. 4 aneinander anklappen, wobei durch das Zurücksetzen der Endflächen 27 an den äußeren Segmenten 5 und 9 beim Zusammenklappen ausreichend Spielraum zur Verfügung gestellt wird, so dass keine Gefahr besteht, dass bei der Klappbewegung ein Anlaufen an in die Durchgänge 23 eingelegten Schläuchen 3 erfolgen könnte. Außerdem ergibt sich durch die passende Anlage der Endflächen 27 an den Flächen des Fortsatzes 25 ein stabilisierender Formschluß zwischen den Segmenten 5, 7, 9.

Auch bei einer nur zwei Segmente aufreisenden, zum Halten von zwei Leitungen vorgesehenen Schelle, ist eine entsprechende Gestaltung mit einem zentralen Fortsatz an einem Segment und entsprechenden, zurückgesetzten Endflächen am anderen Segment gleichermaßen vorteilhaft.

Wie insbesondere aus Fig. 3 zu ersehen ist, weisen die Segmente, wie am Beispiel des Segmentes 9 gezeigt, in ihrem Umfangsbereich 17 eine nutartige Vertiefung 29 zwischen Seitenrändern 32 auf, welche einen Sitz für das als Spanneinrichtung vorgesehen Spannband 11 bildet. Es versteht sich, dass der Aufnahmekörper 1 auch durch eine andersartige gebaute Spanneinrichtung zusammengehalten werden könnte.

Wie Fig. 2 und 4 zeigen, sind die Mulden 21 in den Segmenten 5, 7 und 9 mit teils unterschiedlicher Abmessungen ausgebildet, so dass sich bei der Vereinigung der Segmente im Aufnahmekörper 1 Durchgänge 23 unterschiedlicher lichter Weite für die Lagerung von Schläuchen 3 unterschiedlicher Durchmesser ergeben. Die Mulden 21 weisen abgerundete äußere Ränder 31 auf, so dass eine schonende Lagerung der Schläuche gewährleistet ist. Eine in den Fig. nicht ersichtliche, innere ballige Wölbung der Innenfläche 35 (Fig. 3) der Mulden 21 und damit des Innenraumes der durch die Mulden 21 gebildeten Durchgänge 23 ermöglicht eine sichere Fixierung von Schläuchen auch gröberer Durchmessertoleranzen.

In den Fig. ist das Ausführungsbeispiel der erfindungsgemäßen schelle als nicht an einem Tragelement befestigter Distanzhalter dargestellt. Es versteht sich, dass die Schelle für bestimmte spezielle Anwendungsfälle auch an einem Tragelement festgelegt werden kann, beispielsweise über eine mit dem Spannband 11 zusammenwirkende Befestigungskonsole üblicher Art, wie sie in der EP 0 508 050 B1 aufgezeigt ist, oder über ein anderes Befestigungselement.

Auch können bei entsprechender Dimensionierung und Formgestaltung der den Aufnahmekörper bildenden Halteteile mehr als drei Durchgänge vorgesehen sein, um eine Schelle so auszubilden, dass mehr als drei Schläuche darin auf Distanz gehalten werden können.

## Patentansprüche

1. Schelle zur Lagefixierung von flexiblen Leitungen (3), insbesondere von Druckschläuchen für Hydraulikflüssigkeit bei Arbeitsmaschinen wie Baggern oder dergleichen, mit einem zumindest einen Durchgang (23) als Sitz für eine zu haltende Leitung (3) aufweisenden Aufnahmekörper (1), der aus Halteteilen (5, 7, 9) gebildet ist, die den Durchgang (23) zwischen sich begrenzen und mittels einer Spanneinrichtung (11) aneinander anlegbar sind, **dadurch gekennzeichnet, dass** die Schelle als Distanzhalter für zumindest zwei Leitungen (3) derart ausgebildet ist, dass der Aufnahmekörper (1) aus zumindest zwei zu einem einheitlichen Körper aneinander anlegbaren Halteteilen (5, 7, 9) gebildet ist, von denen jeder zumindest zwei Durchgänge (23) teilweise begrenzt.

2. Schelle nach Anspruch 1, **dadurch gekennzeichnet, dass** die Halteteile (5, 7, 9) des Aufnahmekörpers (1) aus einem elastomeren Werkstoff gebildet sind.

3. Schelle nach Anspruch 1 oder 2, **dadurch gekennzeichnet, dass** der Aufnahmekörper (1) aus zumindest zwei Segmenten (5, 7, 9) mit je kreisbogenförmigem Umfangsbereich (17) gebildet ist, die zur Bildung eines kreisrunden Aufnahmekörpers (1) aneinander anlegbar sind.

4. Schelle nach Anspruch 3, **dadurch gekennzeichnet, dass** die Segmente (5, 7, 9) einstückig geformt und unter Bildung eines Biegescharnieres (18) so miteinander verbunden sind, dass die Segmente (5, 7, 9) durch Schwenkbewegung um das Biegescharnier (18) zum einheitlichen, kreisrunden Aufnahmekörper (1) vereinigbar sind.

5. Schelle nach Anspruch 4, **dadurch gekennzeichnet, dass** der Aufnahmekörper (1) aus drei Segmenten (5, 7, 9) mit sich je über einen Drittelkreis erstreckendem Umfangsbereich (17) gebildet ist, von denen das mittlere Segment (7) an beiden Enden seines kreisbogenförmigen Umfangsbereiches (17) mit je einem Ende des kreisbogenförmigen Umfangsbereiches (17) eines seitlichen Segmentes (5 und 9) über je ein Biegescharnier (18) verbunden ist.

6. Schelle nach Anspruch 4 oder 5, **dadurch gekennzeichnet, dass** die Segmente (5, 7, 9) des kreisrunden Aufnahmekörpers (1) nur in dem, bezogen auf das Kreiszentrum (19), radial außerhalb der Durchgänge (23) gelegenen kreisbogenförmigen Umfangsbereich (17) gleich ausgebildet und in dem zwischen Kreiszentrum (19) und Durchgängen (23) befindlichen Zentralbereich unterschiedlich gestaltet sind.

7. Schelle nach Anspruch 6, **dadurch gekennzeichnet, dass** ein Segment (7) in seinem Zentralbereich einen über das Kreiszentrum (19) hinaus radial vorstehenden Fortsatz (25) aufweist und dass zumindest ein weiteres Segment (5 oder 9) im Zentralbereich zurückgesetzte Endflächen (27) zur passenden Anlage am Fortsatz (25) des benachbarten Segmentes (7) aufweisen.

8. Schelle nach den Ansprüchen 5 und 7, **dadurch gekennzeichnet, dass** das mittlere Segment (7) den über das Kreiszentrum (19) hinaus vorstehenden Fortsatz (25) aufweist und dass beide seitlichen Segmente (5 und 9) im Zentralbereich zurückgesetzte Endflächen (27) zur passenden Anlage an jeweils zugewandten Seitenflächen des Fortsatzes (25) aufweisen.

9. Schelle nach einem der Ansprüche 1 bis 8, **dadurch gekennzeichnet, dass** die Durchgänge (23) zur Lagerung von Leitungen (3) unterschiedlicher Durchmesser eine entsprechend unterschiedliche lichte Weite besitzen.

10. Schelle nach Anspruch 9, **dadurch gekennzeichnet, dass** die Durchgänge (23) eine ballige innere Wölbung besitzen.

11. Schelle nach einem der Ansprüche 1 bis 10, **dadurch gekennzeichnet, dass** als Spanneinrichtung zum aneinander Anlegen der Halteteile (5, 7, 9) des Aufnahmekörpers (1) ein den Umfang des Ausnahmekörpers (1) umgebendes Spannband (11), vorzugsweise Gelenkspannband, vorgesehen ist.

12. Schelle nach Anspruch 11, **dadurch gekennzeichnet, dass** der Aufnahmekörper (1) eine umfängliche Ringnut (29) als Sitz für das Spannband (11) ufweist.
